(19) **Europäisches Patentamt**

**European Patent Office**

**Office européen des brevets**

(11) Veröffentlichungsnummer: **0 280 776 B1**

(12) **EUROPÄISCHE PATENTSCHRIFT**

(45) Veröffentlichungstag der Patentschrift: **01.07.92**

(51) Int. Cl.5: **B23C 9/00**, F16H 57/02, F16D 3/00

(21) Anmeldenummer: **87117665.7**

(22) Anmeldetag: **30.11.87**

(54) **Lageranordnung für eine Kegelradwelle.**

(30) Priorität: **06.03.87 DE 3707176**

(43) Veröffentlichungstag der Anmeldung:
**07.09.88 Patentblatt 88/36**

(45) Bekanntmachung des Hinweises auf die
Patenterteilung:
**01.07.92 Patentblatt 92/27**

(84) Benannte Vertragsstaaten:
**CH DE FR GB IT LI**

(56) Entgegenhaltungen:
**CH-A- 562 074**
**DE-C- 20 665**
**FR-A- 1 000 903**
**FR-A- 2 547 551**
**GB-A- 2 071 263**

(73) Patentinhaber: **MAHO Aktiengesellschaft**
**Postfach 1280 Tiroler Strasse 85**
**W-8962 Pfronten(DE)**

(72) Erfinder: **Babel, Werner**
**Achweg 19**
**W-8962 Pfronten-Meilingen(DE)**

(74) Vertreter: **Patentanwälte Beetz sen. - Beetz jun. Timpe - Siegfried - Schmitt-Fumian Steinsdorfstrasse 10**
**W-8000 München 22(DE)**

# Beschreibung

Die Erfindung betrifft eine Lageranordnung für die Zwischenwelle eines Kegelrads im Vertikal-Fräskopf einer Fräsmaschine, wobei am Kegelrad eine die Zwischenwelle umgebende Lagerhülse befestigt ist, die über zwei axial beabstandete Außenlager im Maschinenteil gelagert ist; siehe z. B. CH-A 562 074.

Bei herkömmlichen Lageranordnungen dieser Art ist das Kegelrad mit dem Endteil der Antriebswelle starr verbunden und die Antriebswelle ist zusammen mit dem Kegelrad im entsprechenden Maschinenteil in mindestens zwei axial beabstandeten Wälzlagern mit geringstmöglichem Spiel gelagert. Die relativ große Starrheit dieser Lageranordnung hat sich jedoch bei Universalfräsmaschinen mit horizontaler und vertikaler Arbeitsspindel als problematisch erwiesen.

Zur genauen Ausrichtung der Achse der vertikalen Arbeitsspindel werden üblicherweise die Anlageflächen des Gehäuses des vertikalen Fräskopfes und/oder des Spindelstocks bzw. eines zwischengeschalteten Schwenkkopfes nachgearbeitet. Dies kann zur Folge haben, daß die Achse der die Vertikalspindel über ein Kegelradpaar antreibenden horizontal gelagerten Welle eine geringfügige Schräglage gegenüber der Achse der im Spindelstock gelagerten Antriebswelle einnimmt. Diese gegenseitige Neigung behindert das Überschieben der Kupplungsmuffe beim drehfesten Verbinden beider Wellen und belastet die Wellenlager.

Aufgabe der Erfindung ist es, eine Lageranordnung der genannten Art zu schaffen, die geringfügige Fluchtungsfehler zweier Wellen kompensieren kann und durch Fluchtungsfehler verursachte Lagerbelastungen vermeidet.

Diese Aufgabe wird erfindungsgemäß dadurch gelöst, daß die Lagerhülse einen inneren Ringbunds aufweist, der mit der Zwischenwelle einen vorbestimmten schmalen Spalt begrenzt und geringfügige Kippbewegungen zwischen der Zwischenwelle und dem Kegelrad zuläßt.

Die Verkeilung des Kegelrades mit der Antriebswelle sichert in herkömmlicher Weise eine drehfeste Verbindung beider Teile, die auch die Übertragung hoher Drehmomente spielfrei gewährleistet. Wesentlich für die Wirkung der erfindungsgemäßen Lageranordnung ist es jedoch, daß die Lagerung der Antriebswelle nicht völlig starr ist, sondern kleine Kippbewegungen ermöglicht. Der bevorzugt am freien Ende der Lagerhülse vorgesehene Ringbund begrenzt zur Mantelfläche der Antriebswelle einen Spalt, der in der Praxis etwa nur 0,02 bis 0,03 mm beträgt. Die durch diesen Spalt ermöglichten Kippbewegungen zwischen der Welle und dem aufgekeilten und mit der Hülse einteilig ausgeführten Kegelrad reicht aus, um die z. B.

durch Nacharbeiten der Bauteile verursachten Fluchtungsfehler zu kompensieren. Insgesamt wird durch die erfindungsgemäße Lageranordnung der Antriebszug flexibler und die Beanspruchungen der Lager des Kegelradpaares vermindern sich, ohne daß die Drehmomentübertragung darunter leidet.

Ein entsprechender Effekt läßt sich erreichen, wenn statt des an dem Ende der Lagerhülse innen angeformten Ringbundes ein Gleitring verwendet wird, der in einer entsprechenden Ausnehmung der Hülse verankert ist, an der Außenfläche der Antriebswelle im Gleitsitz anliegt und aufgrund seiner Materialeigenschaften geringfügig verformbar ist.

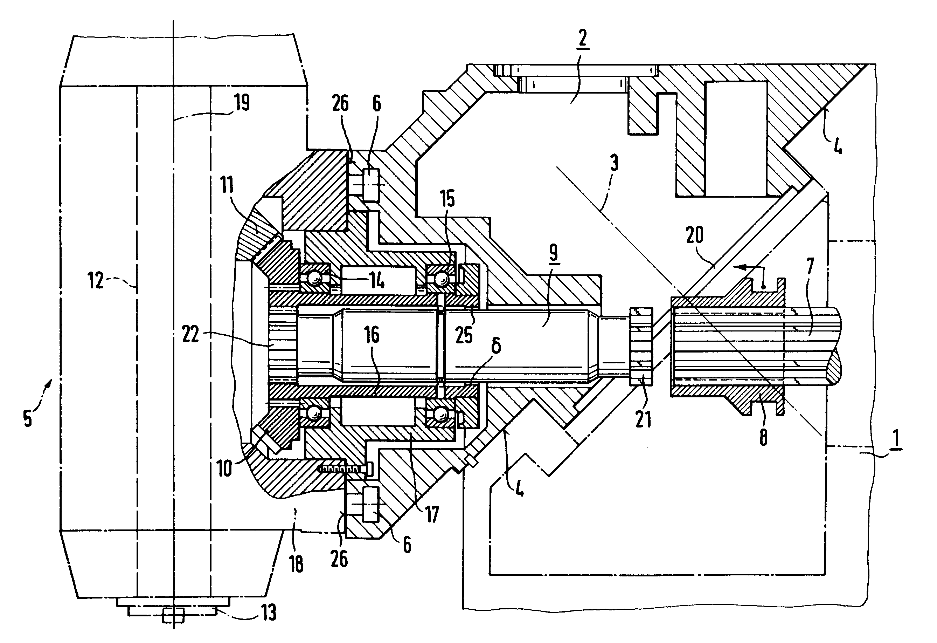

Im folgenden wird ein Ausführungsbeispiel der Erfindung anhand der Zeichnung im einzelnen beschrieben.

Bei dem in der Zeichnung dargestellten Teil einer Universal-Fräsmaschine sind in der erfindungsgemäßen Lageranordnung horizontale Antriebsorgane für die Vertikalspindel gelagert. Am vorderen oberen Endteil des Spindelstocks 1 der Fräsmaschine ist ein Schwenkkopf 2 auf einer schrägen Ringfläche 4 um eine 45°-Achse 3 verdrehbar und in bestimmten Lagen feststellbar angeordnet, an dessen einer Stirnseite ein Vertikalkopf 5 durch Schrauben 6 fest montiert ist. Im Spindelstock 1 ist eine horizontale Antriebswelle 7 gelagert, die auf ihrem dargestellten längsgenuteten Endteil eine axial verschiebbare Schaltmuffe 8 trägt. Im Inneren des Schwenkkopfes 2 ist eine Zwischenwelle 9 vorgesehen, deren hinteres Ende eine Öffnung 20 im Schwenkkopf 2 durchragt und auf deren vorderem Ende ein Kegelrad 10 drehfest aufgekeilt ist. Dieses Kegelrad 10 kämmt mit einem Kegelrad 11, das auf der gestrichelt dargestellten Spindelhülse 12 der Vertikalspindel 13 drehfest aufgekeilt ist. Beide Kegelräder 10 und 11 sind mit je einer Lagerhülse einstückig ausgeführt, von denen nur die in zwei axial beabstandeten äußeren Wälzlagern 14, 15 laufende Lagerhülse 16 dargestellt ist. Die beiden Wälzlager 14, 15 sind in einem hohlzylindrischen Tragkörper 17 angeordnet, der am Gehäuse 18 des Vertikalkopfes 5 durch Schrauben fest montiert ist.

Bei der vorstehend beschriebenen Anordnung ergaben sich bisher folgende Probleme. Nach der Montage des Vertikalkopfes 5 am Schwenkkopf 2 wurden mitunter Ausrichtungsfehler der Achse 19 der Vertikalspindel 13 festgestellt, die durch Feinbearbeitung, z. B. durch Schaben, der gegenseitigen Anlageflächen 26 des Gehäuses 18 und des Schwenkkopfes 2 behoben wurden. Bei einer starren Verbindung der Zwischenwelle 9 und des Kegelrads 10 incl. seiner Lagerhülse 16 führte diese Nachbearbeitung nach der Montage zu einer geringfügigen Schräglage der Zwischenwelle 9. Insbesondere bei längeren starr gelagerten Zwischenwellen 9 konnte diese betragsmäßig geringe Schrägstellung eine seitliche Versetzung ihres die zentrale Öffnung 20 zwischen dem Spindelstock 1 und dem Schwenkkopf 2 durchragenden längsgenuteten Endteils 21 ergeben, durch welche das Überschschieben der Kupplungsmuffe 8 behindert wurde.

Diese auf die bisher grundsätzlich angestrebte starre Lagerung der Zwischenwelle 9 und des Kegelrads 10 mit seiner Lagerhülse 16 im Tragkörper 17 zurückzuführenden Kupplungsprobleme werden durch die neue Lageranordnung überwunden, die geringfügige Kippbewegungen der Zwischenwelle 9 in engen Grenzen beim Überschieben der Kupplungsmuffe 8 auf ihren längsgenuteten Endteil 21 zuläßt. Die Zwischenwelle 9 ist mit ihrem in der Zeichnung linken Endteil über eine Keilnutverbindung 22 drehfest mit dem Kegelrad 10 verbunden, wobei dessen Lagerhülse 16 die Zwischenwelle 9 mit Spiel umgibt. Am freien Ende der Lagerhülse 16 ist ein innerer Ringbund 25 vorgesehen, der mit der Umfangsfläche der Zwischenwelle 9 einen genau definierten Ringspalt δ begrenzt. In den durch die Weite dieses Ringspalts δ bestimmten Grenzen kann die Zwischenwelle 9 beim Überschieben der Kupplungsmuffe 8 seitliche Kippbewegungen ausführen, um die durch die Bearbeitung der Anlageflächen 26 der Bauteile 2 und 6 entstandenen Schräglagen der Zwischenwelle und auch andere Fluchtungsfehler zu kompensieren. Die Weite des Ringspalts δ liegt je nach den Dimensionen und den Toleranzbereichen der Bauteile bei einigen hundertstel Millimetern.

Die Erfindung ist nicht auf das dargestellte Ausführungsbeispiel beschränkt. So können z. B. statt des nach innen vorstehenden Ringbundes an der Hülse auch ein äußerer Ringbund an der Antriebswelle vorgesehen werden, welcher den die definierten Kippbewegungen zulassenden Spalt begrenzt. Schließlich kann dieser Ringbund auch weggelassen werden, wenn der entsprechende Teil der Welle von der am Kegelrad angeformten Hülse mit einem Zwischenabstand umgeben wird, welcher in etwa der Weite des vom Ringbund definierten Spaltes entspricht.

## Patentansprüche

1. Lageranordnung für die Zwischenwelle (9) eines Kegelrads im Vertikal-Fräskopf einer Fräsmaschine, wobei am Kegelrad (10) eine die Zwischenwelle (9) umgebende Lagerhülse (16) befestigt ist, die über zwei axial beabstandete Außenlager (14, 15) im Maschinenteil gelagert ist,
   **dadurch gekennzeichnet,**
   daß die Lagerhülse (16) einen inneren Ringbund (25) aufweist, der mit der Zwischenwelle (9) einen vorbestimmten Spalt δ begrenzt und geringfügige Kippbewegungen zwischen der Zwischenwelle (9) und dem Kegelrad (10) zuläßt.

2. Lageranordnung nach Anspruch 1,
   dadurch gekennzeichnet,
   daß das Kegelrad (10) und die Lagerhülse (16) als einstückiges Bauteil ausgebildet sind.

3. Lageranordnung nach Anspruch 1 oder 2,
   dadurch gekennzeichnet,
   daß der Ringbund (25) am offenen Ende der Lagerhülse (16) ausgebildet ist.

4. Lageranordnung nach einem der Ansprüche 1 bis 3,
   dadurch gekennzeichnet,
   daß der Ringbund (25) einstückig mit der Lagerhülse (16) ausgebildet ist.

5. Lageranordnung nach Anspruch 1 bis 3,
   dadurch gekennzeichnet,
   daß der Ringbund ein an der Lagerhülse befestigter Gleitring ist.

## Claims

1. A bearing arrangement for the intermediate shaft (9) of a bevel gear in the vertical milling head of a milling machine, there being secured to the bevel gear (10) a bearing sleeve which extends around the intermediate shaft (9) and which is mounted in the machine part by way of two axially spaced-apart external bearings (14, 15),
   characterised in that
   the bearing sleeve (16) has an inner annular collar (25) which cooperates with the intermediate shaft (9) to bound a predetermined gap δ and permits minor tilting movements between the intermediate shaft (9) and the bevel gear (10).

2. A bearing arrangement according to claim 1, characterised in that the bevel gear (10) and the bearing sleeve (16) are a unitary component.

3. A bearing arrangement according to claim 1 or 2, characterised in that the annular collar (25) is devised at the open end of the bearing sleeve (16).

4. A bearing arrangement according to any of claims 1 to 3, characterised in that the annular collar (25) is unitary with the bearing sleeve (16).

**5.** A bearing arrangement according to claims 1 to 3, characterised in that the annular collar is a sliding ring secured to the bearing sleeve.

## Revendications

**1.** Dispositif de palier pour l'arbre intermédiaire (9) d'un pignon conique inclus dans la tête porte-fraise verticale d'une fraiseuse, dans lequel il est prévu une douille de palier (16) fixée au pignon conique (10), qui entoure l'arbre intermédiaire (9), et qui est montée rotative dans l'élément de machine par l'intermédiaire de deux paliers extérieurs (14, 15) espacés axialement,
caractérisé
en ce que la douille de palier (16) présente une collerette annulaire intérieure (25) qui délimite une fente δ prédéterminée avec l'arbre intermédiaire (9), et qui admet de petite mouvements d'inclinaison entre l'arbre intermédiaire (9) et le pignon conique (10).

**2.** Dispositif de palier selon la revendication 1,
caractérisé
en ce que le pignon conique (10) et la douille de palier (16) forment un élément d'une seule pièce.

**3.** Dispositif de palier selon la revendication 1 ou 2,
caractérisé
en ce que la collerette annulaire (25) est formée à l'extrémité ouverte de la douille de palier (16).

**4.** Dispositif de palier selon une des revendications 1 à 3,
caractérisé
en ce que la collerette annulaire (25) est formée d'une seule pièce avec la douille de palier (16).

**5.** Dispositif de palier selon les revendications 1 à 3,
caractérisé
en ce que la collerette annulaire est une bague de glissement fixée à la douille de palier.